# EUROPÄISCHE PATENTANMELDUNG

(11) **EP 2 538 618 A1**
(43) Veröffentlichungstag der Anmeldung: **26.12.2012**
(21) Anmeldenummer: 11170940.8
(22) Anmeldetag: 22.06.2011
(51) Int. Cl.: H04L 12/56

(54) **Verfahren zur Übertragung von Datenpaketen**

(71) Anmelder: SIEMENS AKTIENGESELLSCHAFT, 80333 München (DE)
(72) Erfinder: Metzler, Matthias, 76229 Karlsruhe (DE)

(57) **Zusammenfassung**

Die Erfindung betrifft ein Verfahren zur Übertragung von Datenpaketen (9, 22) von einer Sendereinheit zu einer Empfängereinheit über eine Kommunikationsverbindung, wobei die Datenpakete (9, 22) jeweils mindestens ein Kennzeichen (15, 28) für den Beginn und mindestens ein Kennzeichen (17, 30) für das Ende des jeweiligen Datenpaketes (9, 22) aufweisen und jedem Datenpaket (9, 22) eine Priorität zugeordnet ist. Es werden Maßnahmen vorgeschlagen, mittels welchen die Datenübertragung im Hinblick auf die Latenz bzw. Latenzzeit verbessert wird, welche die Zeitspanne zwischen der Aufforderung zur Übertragung eines hochprioren Datenpaketes (22) und dessen Empfang beim Empfänger repräsentiert.

## Beschreibung

Die Erfindung betrifft ein Verfahren zur Übertragung von Datenpaketen von einer Sendereinheit zu einer Empfängereinheit über eine Kommunikationsverbindung, wobei die Datenpakete jeweils mindestens ein Kennzeichen für den Beginn und mindestens ein Kennzeichen für das Ende des jeweiligen Datenpaketes aufweisen und jedem Datenpaket eine Priorität zugeordnet ist. Ferner betrifft die Erfindung eine zur Durchführung des Verfahrens geeignete Anordnung sowie eine Sender-und eine Empfängereinheit für eine derartige Anordnung.

Kommunikationssysteme aus den Bereichen der so genannten Local- oder Wide-Area-Networks (LAN, WAN) werden immer häufiger in der Fertigungs- und/oder Prozessautomatisierung eingesetzt und bestimmen deren Aufbau und Verhalten. Diese Kommunikationssysteme basieren auf verschiedenen Standards, beispielsweise dem so genannten Ethernet-, ATM- oder Fibre Channel-Standard, oder auf proprietären bzw. herstellerspezifischen Lösungen.

In derartigen Systemen werden die Daten gewöhnlich in Form von Datenpaketen bzw. Telegrammen seriell über eine Kommunikationsverbindung übertragen, wobei die Anforderungen gemäß dem OSI-Referenzmodell erfüllt werden. Ein Datenpaket umfasst die eigentlichen Nutzdaten sowie zusätzliche Protokoll- und Sicherungs-Informationen, welche in Form eines den Nutzdaten vorangestellten so genannten Headers und eines das Datenpaket abschließenden so genannten Footers ein hohes Datenvolumen bzw. eine große Datenmenge im Hinblick auf Verwaltungsdaten (Overhead) darstellen.

Im Rahmen einer Datenübertragung bzw. eines Transports von Daten wird ein Datenpaket von einem Sender zu einem Empfänger übertragen, der den Empfang des Datenpaketes mittels einer Transport-Quittung dem Sender anzeigt. Für den Fall, dass der Sender keine Transport-Quittung empfängt, was auf eine Störung der Übertragung hinweist, übermittelt der Sender das Datenpaket erneut, d. h., die Datenübertragung wird wiederholt.

Auch in höheren Schichten des OSI-Referenzmodells werden gewöhnlich zusätzliche Informationen, beispielsweise applikative Quittungen, Transport-Quittierungen oder Puffer-Verwaltungsinformationen, sowie zusätzliche Verwaltungs-Pakete übertragen, was ebenfalls bedeutet, dass ein hohes Datenvolumen bzw. eine große Datenmenge zu übertragen ist. Ein hohes Datenvolumen bzw. eine große Datenmenge wirkt sich allerdings nachteilig auf die Dauer der Datenübertragung aus.

Gewöhnlich werden Paketen, beispielsweise Datenpaketen, unterschiedliche Prioritäten zugeteilt bzw. zugeordnet, wobei ein so genannter Arbiter entsprechend diesen Zuteilungen die Datenübertragung über eine Kommunikationsverbindung bzw. einen Übertragungskanal steuert. Die Übertragung eines hochprioren Datenpaketes hat Vorrang gegenüber der Übertragung eines niederprioren Datenpaketes, was bedeutet, dass zunächst das hochpriore Datenpaket und anschließend das niederpriore Datenpaket übertragen wird.

Es kann nun vorkommen, dass ein hochpriores Datenpaket zu übertragen ist, die laufende Übertragung eines niederprioren Datenpaketes allerdings noch nicht abgeschlossen ist. In diesem Fall kommt es zu Verzögerungen im Hinblick auf den Beginn der Übertragung des hochprioren Datenpaketes, weil die Übertragung des niederprioren Datenpaketes zunächst abgeschlossen bzw. abgewartet werden muss, ehe das hochpriore Datenpaket übertragen werden kann. Mit anderen Worten: der Sender kann das hochpriore Datenpaket erst zeitlich verzögert senden bzw. der Empfänger kann das hochpriore Datenpaket erst zeitlich verzögert empfangen und bearbeiten; die Latenz bzw. Latenzzeit, welche die Zeitspanne ab der Aufforderung zur Übertragung des hochprioren Datenpaketes und dessen Empfang beim Empfänger oder die Zeitspanne ab dieser Aufforderung und den Beginn bzw. Start der Übertragung repräsentiert, erhöht sich aufgrund der noch nicht abgeschlossenen Übertragung des niederprioren Datenpaketes.

Insbesondere in Automatisierungseinrichtungen sowie im Rahmen der industriellen Kommunikation ist eine niedrige Latenz erforderlich. Dort sind hohe Datenübertragungsraten sowohl im Hinblick auf kleine Datenpakete - Pakete mit kleinem Datenvolumen bzw. mit kleiner Datenmenge - als auch bezüglich großer Datenpakete - Pakete mit hohem Datenvolumen bzw. mit großer Datenmenge - vorgesehen. Darüber hinaus ist eine vorhersehbare und/oder garantierte Datenübertragungsrate wünschenswert, wobei die Daten mit möglichst niedriger Latenz zu übertragen sind und die Latenz ebenfalls möglichst vorhersehbar und konstant sein sollte. In diesem Umfeld der Automatisierung konkurriert eine Vielzahl unterschiedlicher Dienste mit unterschiedlichen Prioritäten um die zur Verfügung stehende Bandbreite, so dass auch hier einem geeigneten Prioritätsschema eine besondere Bedeutung zukommt. Die Übertragung von Daten kritischer Dienste wird gewöhnlich bevorzugt oder in bestimmten Zeitabständen arbitriert.

An ein hochverfügbares Automatisierungsgerät, welches mindestens zwei CPU-Baugruppen umfasst, die über eine Punkt-zu-Punkt-Kommunikationsverbindung Informationen austauschen, werden ebenfalls sehr hohe Anforderungen im Hinblick auf die Reaktionszeit und Bearbeitungszeit gestellt, wobei eine zunehmende Leistungsfähigkeit der CPU-Baugruppen eine Verkürzung der Bearbeitungszeit von Anwender- bzw. Steuerprogramm bewirkt. In einem derartigen Automatisierungsgerät ist die Latenz ebenfalls ein wichtiger Aspekt, weil beispielsweise zur Verwirklichung eines Dienstes zur Synchronisation von Anwenderdaten die Kommunikation zwischen den beiden CPU-Baugruppen in geringstmöglicher Zeit zu bewerkstelligen ist. Ferner sind die Anwender- und/oder Systemdaten effektiv zu übertragen, insbesondere zur Bewerkstelligung eines Dienstes zum Ankoppeln und Aufdaten der als Reserve aktivierten CPU-Baugruppe durch die als Master aktivierte CPU-Baugruppe.

Eine Verringerung der Latenz kann dadurch bewirkt werden, dass der Bustakt eines Kommunikationssystems erhöht wird, wodurch sich auch die Brutto- und Netto-Bandbreite erhöhen. Nachteilig ist allerdings der erhöhte Aufwand zur Verwirklichung derartiger Maßnahmen, wodurch auch die Kosten für die Komponenten des Systems, z. B. für Bus-/Netzknoten oder das Übertragungsmedium, steigen.

Im Rahmen einer Datenübertragung gemäß dem so genannten Asynchronous Transfer Mode (ATM) wird eine konstante kleine Paketgröße definiert, um in den dann zwangsläufig häufiger und schneller vorhandenen Lücken Protokoll-Informationen und höher priorisierte Daten mit relativ niedriger Latenz übertragen zu können. Nachteil ist die relativ geringe nutzbare (Netto-) Bandbreite durch die "Zerstückelung" der zu übertragenden Nachrichten.

Gemäß der Ethernet-Technologie wird die nutzbare Übertragungsrate durch die Verwendung von so genannten Jumbo-Frames verbessert, was eine Erhöhung des Anteils der Nutzdaten pro Paket zur Folge hat. Nachteilig ist allerdings, dass sich eine derartige Maßnahme störend auf die Latenz und vor allem auf das deterministische Verhalten höher priorisierter Daten auswirkt, weil sich deren Übertragung entsprechend verzögert.

Bussysteme, welche z. B. den Anforderungen gemäß IEEE1394 genügen, verwirklichen zumindest teilweise eine isochrone Datenübertragung. Die zur Verfügung stehende Bandbreite pro Zeiteinheit ist einstellbar oder fest unterteilt, wobei so genannte Slots für verschiedene Dienste verwendet werden und die Bandbreite reserviert wird. Durch derartige Maßnahmen wird zwar ein sehr gutes deterministisches Verhalten erzielt, die Latenz ist jedoch nicht optimal, da in jedem Fall die nächste Slot-Time abgewartet werden muss. Darüber hinaus ist die nutzbare Bandbreite nicht zufrieden stellend, weil gewöhnlich Bandbreite (Slots) nicht genutzt werden kann.

Das so genannte Process Field Network (Profinet), welches auf Basis von Ethernet entwickelt wurde, definiert ein Mischverfahren, das einerseits einen großen asynchronen Slot mit einem Verhalten gemäß Ethernet aufweist, andererseits aber auch mit mehreren isochronen Slots für die Echtzeit-Erweiterungen versehen ist. Große Datenmengen können im asynchronen Slot nach wie vor relativ gut - unter Verlust der für die isochronen Dienste reservierten Bandbreite - übertragen werden, wobei zwar für die isochronen Dienste ein sehr gutes deterministisches Verhalten aber keine optimale Latenz erreicht wird.

Aus der DE 10 2008 039 580 A1 ist ein Verfahren zum Übertragen von Datenpaketen in einem Kommunikationsnetz bekannt, wobei erste Datenpakete mit einer niedrigen Priorität zwischen einem Sender und einem Empfänger des Kommunikationsnetzes und zweite Datenpakete mit einer hohen Priorität gegenüber den ersten Datenpaketen bevorzugt zwischen dem Sender und dem Empfänger übertragen werden.

Der Erfindung liegt daher die Aufgabe zugrunde, ein Verfahren der eingangs genannten Art anzugeben, mittels welchem die Datenübertragung im Hinblick auf Latenz verbessert wird. Darüber hinaus ist eine Anordnung zu schaffen, welche zur Durchführung eines derartigen Verfahrens geeignet ist, und ferner eine Sender- und eine Empfängereinheit für eine derartige Anordnung.

Diese Aufgabe wird im Hinblick auf das Verfahren durch die im Anspruch 1 angegebenen, in Bezug auf die Anordnung durch die im Anspruch 7 und bezüglich der Sender- bzw. Empfängereinheit durch die im Anspruch 13 bzw. 17 angegebenen Maßnahmen gelöst.

Vorteilhaft ist, dass im Rahmen der Datenübertragung von Paketen die Latenz bzw. Latenzzeit verringert wird, ohne die übrigen Eigenschaften der Übertragung nennenswert zu verändern. Insbesondere die Bandbreite bleibt im Wesentlichen erhalten, auf weitere Übertragungskanäle oder Übertragungsmedien kann daher verzichtet werden.

Die Erfindung geht von der Idee aus, ein gerade laufendes Paket, d. h. ein Paket, dessen Übertragung bereits begonnen hat, anzuhalten bzw. zu unterbrechen, falls eine hochpriore Anforderung vorliegt, dann das hochpriore Paket in das laufende Paket "einzuschachteln" und schließlich das hochpriore Paket zu übertragen und die Übertragung des noch nicht übertragenen Teils des niederprioren Pakets fortzusetzen. Im Unterschied zu einer an sich bekannten Datenübertragung, im Rahmen derer die Datenpakete bzw. Protokollpakete in der Reihenfolge ihres Auftretens und ihrer Priorität entsprechend zur Übertragung arbitriert und jeweils vollständig übertragen werden, wird aufgrund derartiger Maßnahmen im Hinblick auf das hochpriore Paket die Übertragung dieses hochprioren Paketes nicht oder nur unwesentlich verzögert.

Unter dem Begriff Pakete sowie Datenpakete werden im Folgenden in diesem Zusammenhang auch applikative Protokollpakete verstanden.

In einer Ausgestaltung der Erfindung ist vorgesehen, das mindestens eine Unterbrechungszeichen in Form von mindestens einem Unterbrechungskennzeichen und/oder in Form des Kennzeichens für den Beginn des zweiten Datenpaketes oder in Form einer Kombination aus einem Unterbrechungskennzeichen und einem gesonderten Zeichen für den Beginn des zweiten Datenpaketes zu übertragen. Ferner ist vorgesehen, das mindestens eine Fortsetzungszeichen in Form mindestens eines Fortsetzungskennzeichens und/oder in Form des Kennzeichens für das Ende des zweiten Datenpaketes oder in Form einer Kombination aus einem Fortsetzungskennzeichen mit einem gesonderten Zeichen für das Ende des zweiten Datenpaketes zu übertragen.

Für den Fall, dass eine hochpriore Anforderung vorliegt, unterbricht die Sendereinheit das "laufende" Paket an geeigneter Stelle, "hält" die Übertragung also an, und fügt ein Kennzeichen dieser Unterbrechung ein. Dieses Kennzeichen wird beispielsweise in einer einfachen Ausführungsform durch das "implizite" Kennzeichen für den Beginn des hochprioren Datenpakets (Startzeichen) verwirklicht, wodurch die Länge des Datenpaketes nicht vergrößert zu werden braucht. Allerdings wird in diesem Fall ein möglicher Übertragungsfehler in der Empfängereinheit schlechter erkannt.

Vorzugsweise ist als Kennzeichen ein spezielles Unterbrechungskennzeichen oder eine Kombination aus diesem Unterbrechungskennzeichen mit einem gesonderten Zeichen für den Beginn des zweiten Datenpaketes vorgesehen. Diese "expliziten" Kennzeichen bedeuten zwar eine - unwesentliche - Verlängerung bzw. Vergrößerung des hochprioren Datenpakets, allerdings wird dadurch die Unterbrechung eindeutig gekennzeichnet. Aufgrund dessen wird in der Empfängereinheit eine Fehlererkennung im Hinblick auf Übertragungsfehler verbessert.

Auch das Fortsetzungszeichen ist "implizit" oder "explizit" ausgebildet. In einer einfachen "impliziten" Ausführungsform ist dieses Fortsetzungszeichen durch das Kennzeichen für das Ende des hochprioren Datenpakets (Endezeichen) verwirklicht, in einer besonderen "expliziten" Ausführungsform mittels eines Fortsetzungskennzeichens oder in Form einer Kombination aus einem Fortsetzungskennzeichen mit einem gesonderten Zeichen für das Ende des zweiten Datenpaketes.

Beispielsweise nach einer expliziten Unterbrechung wird das hochpriore Datenpaket "eingeschachtelt", es wird also eine Art "Kontext-Wechsel" bewirkt, wobei der noch nicht übertragene Teil des niederprioren Datenpakets z. B. in einem Hintergrundspeicher der Sendereinheit hinterlegt wird. Das eingeschachtelte (unterbrechende) Paket wird in bekannter Form gesendet. Nach Ende des eingeschachtelten Pakets wird der Kontext wieder zum unterbrochenen ersten Paket zurückgewechselt, ein Kennzeichen zur Fortsetzung des unterbrochenen Pakets eingefügt und dieses zusammen mit dem im Hintergrundspeicher hinterlegten Teil des niederprioren Datenpaketes übertragen.

Der Empfänger erkennt mittels des Unterbrechungszeichens die Unterbrechung, unterbricht den Empfang des laufenden Datenpaketes - nimmt also den Kontext des bis hier übertragenen ersten Datenpaketes in den Hintergrund - und hinterlegt z. B. den bereits übertragenen Teil des niederprioren Datenpaketes in einen Zwischen- bzw. Hintergrundspeicher, empfängt und verarbeitet anschließend das eingeschachtelte hochpriore zweite Datenpaket in einem neuen Kontext und wechselt mit Empfang des Fortsetzungszeichens wieder in den ursprünglichen Kontext zurück, empfängt und verarbeitet das zuvor unterbrochene erste Datenpaket bis zum Ende.

Für einen Kontext-Wechsel, also zum Halten der Übertragung des unterbrochenen Pakets im Hintergrund und gleichzeitigen Übertragen des eingeschachtelten Pakets im Vordergrund, sind vorzugsweise zusätzliche Ressourcen in der Sender- und auch in der Empfängereinheit vorgesehen. Beispielsweise weisen dazu sowohl die Sender- als auch die Empfängereinheit geeignete Hard- und/oder Softwaremittel auf. Die Ressourcen, die direkt in die laufende Übertragung der Datenpakete involviert sind, sind zweifach vorhanden, beispielsweise als Zähler bzw. Pointer, die die Position innerhalb eines Paketes beinhalten, Zähler bzw. Pointer auf Sende- bzw. Empfangspuffer, Ressourcen zum Handling und zur Berechnung eines Cyclic redundancy check (CRC)-Wertes und als Hintergrund- und Zwischenspeicher zur Hinterlegung von Nutzdaten.

Für einen Kontext-Wechsel kann z. B. je eine Ressource dem unterbrochenen und dem eingeschachtelten Paket zugeordnet sein und in der Sender- und Empfängereinheit jeweils auf eine andere Ressource umgeschaltet werden, so dass im Vordergrund auf verschiedenen Ressourcen gearbeitet wird, oder es kann z. B. für die laufende Übertragung (im Vordergrund) eine feste Ressource verwendet werden, wobei die Inhalte dieser bei Unterbrechung in einer Hintergrund-Ressource "gerettet" und beim Fortsetzen wieder "restauriert" werden.

Zwischen dem Unterbrechungskennzeichen und dem eingeschachtelten Paket sowie zwischen dem Fortsetzungskennzeichen und dem unterbrochenen Paket kann eine Anzahl von Leer- bzw. Synchronisierzeichen gesendet werden, um sicherzustellen, dass die Zeit für einen Kontext-Wechsel ausreicht.

In einer weiteren Ausgestaltung der Erfindung ist vorgesehen, dass mittels der Sendereinheit die Anforderung der Datenübertragung des zweiten Datenpaketes bis zum Ende der Übertragung des ersten Datenpaketes oder bis zur Übertragung einer vorgebbaren Anzahl von Zeichen des ersten Datenpaketes blockiert wird. Dadurch wird ermöglicht, die Übertragung des niederprioren ersten Datenpaketes nur "sinnvoll" zu unterbrechen. Für den Fall, dass z. B. sowieso nur noch wenige Zeichen des laufenden ersten Pakets übertragen werden müssen, wird diese Übertragung nicht unterbrochen, sondern das Paket wird erst vollständig und erst dann das hochpriore Paket übertragen. Auch für den Fall, dass gerade der "Header" des ersten Paketes übertragen wird, wird die Übertragung des ersten Paketes erst dann unterbrochen, nachdem dieser vollständig übertragen wurde. Die Anzahl von Zeichen des ersten Datenpaketes, welche vorgibt, wann eine Unterbrechung sinnvoll ist, ist abhängig von dem verwendeten Paketformat.

Für den Fall, dass die Übertragung des hochprioren Pakets abgeschlossen und die Übertragung des niederprioren Paketes fortgesetzt werden kann, allerdings zum Zeitpunkt der möglichen Fortsetzung des niederprioren und unterbrochenen Pakets eine Anforderung für die Übertragung eines weiteren hochprioren Paketes vorliegt, bleibt die Übertragung des niederprioren Paketes unterbrochen (fortsetzende Unterbrechung), das weitere hochpriore Paket wird "eingeschachtelt". Erst dann, wenn die Übertragung des letzten eingeschachtelten Pakets beendet ist, wird die Übertragung des ursprünglich unterbrochenen, niederprioren Paketes fortgesetzt. Um die Dauer einer Unterbrechung zu minimieren, ist vorgesehen, deren Dauer oder die Anzahl weiterer Unterbrechungen zu begrenzen.

In einer weiteren Ausgestaltung der Erfindung ist vorgesehen, dass das erste Datenpaket einer ersten Prioritätsklasse und das zweite Datenpaket einer zweiten Prioritätsklasse zugeordnet wird, deren Priorität höher ist als die Priorität der ersten Prioritätsklasse, wobei innerhalb dieser Prioritätsklassen die Datenpakete mit unterschiedlichen Prioritäten versehen werden. Dadurch wird eine Hierarchie im Hinblick auf die Prioritäten verwirklicht. Mittels einer derartigen Einteilung in Prioritätsklassen bzw. Prioritätsgruppen können Pakete zweier Dienste derselben Klasse bzw. Gruppe angehören, wobei im Rahmen der Übertragung von Paketen innerhalb einer Prioritätsklasse diese sich gegenseitig nicht unterbrechen. Innerhalb einer Gruppe wird mittels einer "internen" Priorität unterschieden, welches Paket bei gleichzeitiger Anforderung zuerst zu übertragen ist.

Um zu verhindern, dass die Übertragung eines Datenpaketes eines Dienstes zu oft und/oder zu lange unterbrochen wird, ist eine dynamische Anpassung der Prioritäten vorgesehen. Für den Fall, dass z. B. die Übertragung eines zunächst niederprioren Datenpaketes gegenüber anderen Datenpaketen in der Vergangenheit zu oft und/oder zu lange unterbrochen wurde, kann diesem Datenpaket eine höhere Priorität zugeordnet werden, aufgrund dessen eine aktuelle Datenübertragung so bald wie möglich unterbrochen wird. Jedem niederprioren Paket kann eine Default-Priorität und ein entsprechender Zähler bzw. Timer zugeordnet werden. Dieser Zähler/Timer wird pro eingeschachteltes Paket und pro Zeiteinheit inkrementiert. Sobald ein einstellbarer bzw. vorgebbarer Schwellwert - z. B. vier Pakete oder 1 ms - überschritten ist, erhält das Datenpaket eine höhere Priorität.

Selbstverständlich ist es möglich, dass in der beschriebenen Art und Weise auch im Rahmen der Übertragung ein weiteres Datenpaket, dessen Priorität höher ist als die Priorität des zweiten Datenpakets, eine laufende Übertragung dieses zweiten Datenpakets unterbricht, wobei das weitere Datenpaket in das zweite Datenpaket eingeschachtelt wird, welches in das erste Datenpaket eingeschachtelt ist.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figuren 1 und 5: Zeichenströme,
- Figuren 2 und 6: den Ablauf einer Datenübertragung,
- Figur 3: Datenübertragungskomponenten und
- Figur 4: den Aufbau eines Kommunikationssystems.

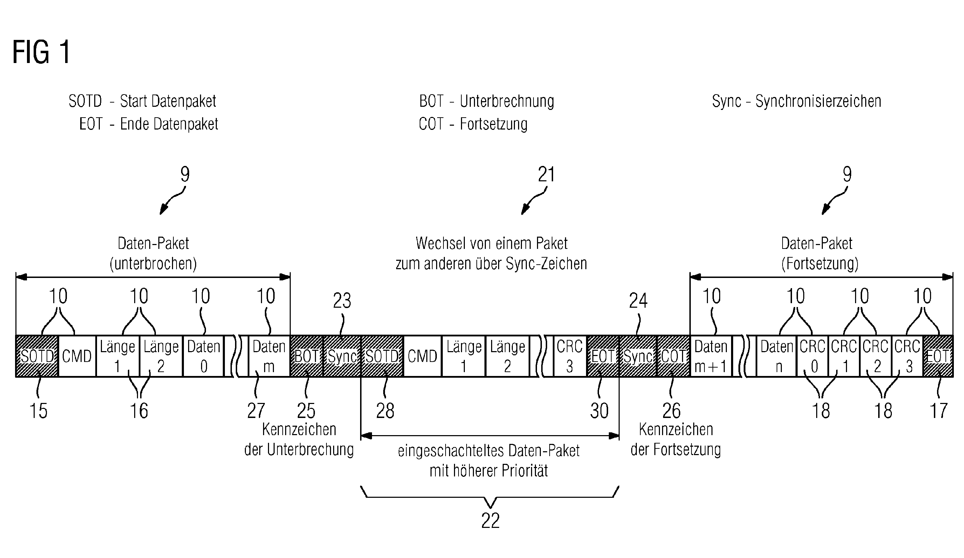

Die in den Figuren 1 bis 6 dargestellten gleichen Teile sind mit gleichen Bezugszeichen versehen.

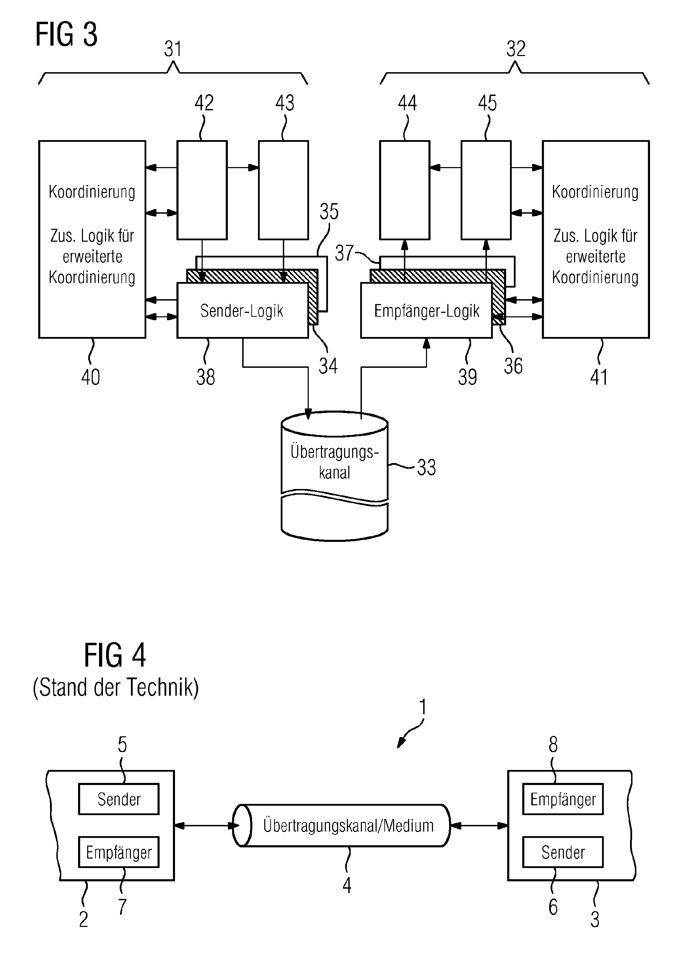

Es wird zunächst auf die Figuren 4 bis 6 verwiesen, in welchen ein an sich bekanntes Kommunikationssystem 1, ein an sich bekannter Zeichenstrom eines zu übertragenden Datenpakets sowie der Ablauf der Übertragung dieses Zeichenstroms dargestellt sind.

Das an sich bekannte Kommunikationssystem 1 weist einen ersten und einen zweiten Teilnehmer 2, 3 auf, beispielsweise Teilnehmer in Form von CPU-Baugruppen eines hochverfügbaren, redundant aufgebauten Automatisierungsgerätes, welche über eine bidirektionale Kommunikationsverbindung 4 Informationen austauschen. Beide Teilnehmer 2, 3 sind jeweils mit einer Sendereinheit 5, 6 sowie einer Empfängereinheit 7, 8 versehen, wobei die Sendereinheiten 5, 6 den Empfängereinheiten 7, 8 über die Kommunikationsverbindung 4 Datenpakete übermitteln, welche diese Empfängereinheiten 7, 8 gewöhnlich vorverarbeiten und beispielsweise in einem Speicher hinterlegen.

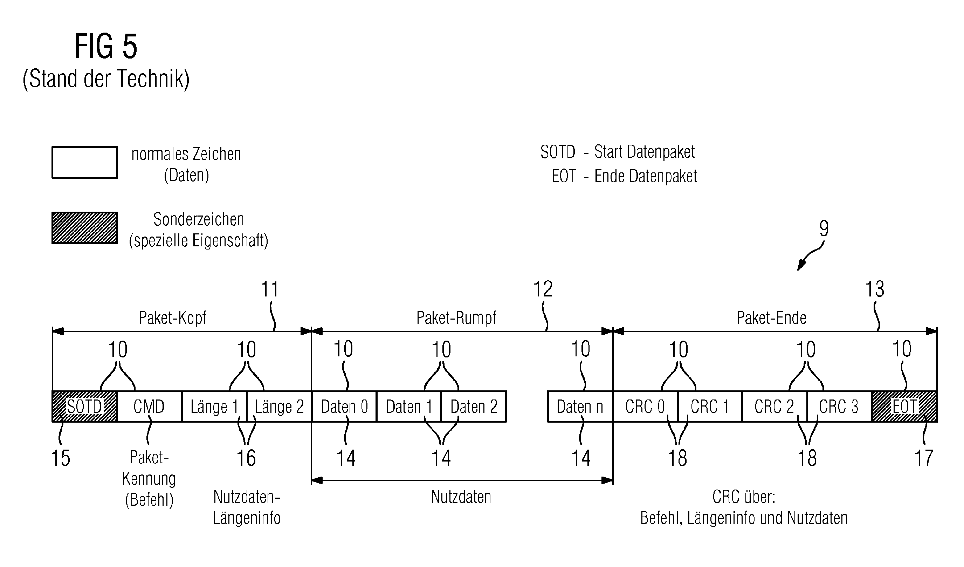

In Figur 5 ist ein an sich bekannter Aufbau eines Datenpaketes 9 veranschaulicht. Dieses weist eine Vielzahl von Zeichen 10 auf, welche z. B. 8, 16 oder 32 Bit breit organisiert sind. Die Zeichen 10 können sowohl Steuerinformationen bzw. Steuerzeichen als auch Nutzdaten enthalten und sind Bestandteile eines Paket-Kopfes (Header) 11, eines Paket-Rumpfes 12 oder eines Paket-Endes (Footer) 13. Der Paket-Rumpf 12 weist ausschließlich Nutzdaten 14 auf, der Paket-Kopf 11 dagegen umfasst Steuerzeichen, von denen ein Steuerzeichen in Form eines Kennzeichens 15 den Beginn des Datenpaketes 9 und Kennzeichen 16 die Länge des Datenpaketes 9 anzeigen. Das Paket-Ende (Footer) 13 weist ebenfalls Steuerzeichen auf, von denen ein Steuerzeichen in Form eines Kennzeichens 17 das Ende des Datenpaketes 9 anzeigt, sowie ferner Prüfwerte 18, die im Rahmen einer zyklischen Redundanzprüfung (cyclic redundancy check, CRC) ermittelt werden und zur Erkennung von Fehlern in der Datenübertragung vorgesehen sind.

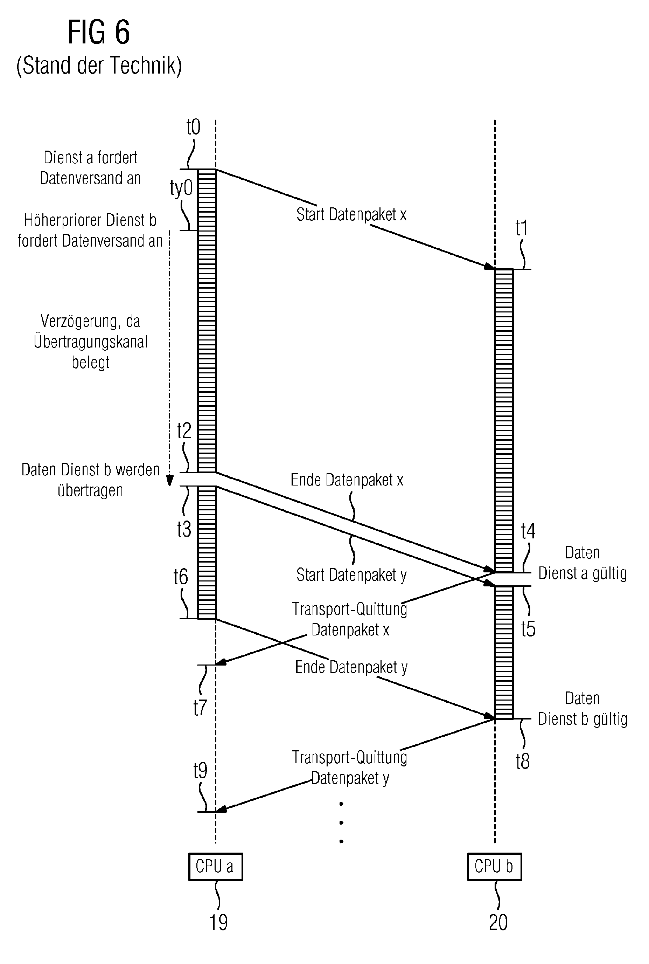

Im Folgenden wird auf Figur 6 verwiesen, in welcher ein an sich bekannter Ablauf einer Datenübertragung zwischen einer ersten und einer zweiten über einen Bus miteinander verbundener CPU-Baugruppen 19, 20 eines hochverfügbaren Automatisierungsgeräts dargestellt ist. Es wird angenommen, dass ein durch die erste CPU-Baugruppe 19 zu verarbeitender erster Dienst a, z. B. ein Dienst in Form einer Routine zum Aufdaten der zweiten CPU-Baugruppe 20 mit aktuellen Daten der ersten CPU-Baugruppe 19, eine Datenübertragung zur Übertragung eines ersten Datenpaketes x anfordert. Das Versenden des Datenpaketes x beginnt zu einem Zeitpunkt t0 und endet zu einem Zeitpunkt t2, wobei das Datenpaket x zeitverzögert ab einem Zeitpunkt t1 bis zu einem Zeitpunkt t4 von der zweiten CPU-Baugruppe 20 empfangen wird. Diese quittiert der ersten CPU-Baugruppe 19 den Erhalt des Datenpaketes x, welche zu einem Zeitpunkt t7 eine entsprechende Transport-Nachricht empfängt. Es kann nun vorkommen, dass zwischen dem Zeitpunkt t0 und t2, z. B. zu einem Zeitpunkt ty0, ein zweiter Dienst b eine Datenübertragung anfordert, dessen Priorität höher ist als die Priorität des ersten Dienstes a, was bedeutet, dass die Priorität eines zu übertragenden zweiten Datenpaketes y ebenfalls höher ist als die Priorität des ersten Datenpaketes x. In diesem Fall verzögert sich die Übertragung des zweiten Datenpaketes y, da der Übertragungskanal bzw. der Bus aufgrund der aktuellen Übertragung des ersten Datenpaketes x belegt ist. Erst wenn die erste CPU-Baugruppe 19 das erste Datenpaket x bis zum Zeitpunkt t2 vollständig übermittelt hat, kann die Übertragung des zweiten hochprioren Datenpaketes y starten. Im vorliegenden Beispiel beginnt die Übertragung des zweiten Datenpaketes y zu einem Zeitpunkt t3 und endet zu einem Zeitpunkt t6, wobei die zweite CPU-Baugruppe 20 das zweite Datenpaket y ab einem Zeitpunkt t5 bis zu einem Zeitpunkt t8 empfängt und die zweite CPU-Baugruppe 20 den Erhalt des zweiten Datenpaketes y ebenfalls mittels einer Transport-Nachricht quittiert, die die erste CPU-Baugruppe zu einem Zeitpunkt t9 empfängt.

Die Verzögerung der Übertragung des zweiten hochprioren Datenpaketes y bzw. die Latenz (Latenzzeit), welche die Zeitspanne ab der Aufforderung zur Datenübertragung dieses Datenpaketes y, also ab dem Zeitpunkt ty0, und dem Beginn dieser Datenübertragung, also ab dem Zeitpunkt t3, bzw. die Zeitspanne ab diesem Zeitpunkt ty0 und dem vollständigen Empfang des zweiten Datenpaketes y, also bis zum Zeitpunkt t8, repräsentiert, wirkt sich störend auf die Leistungsfähigkeit des hochverfügbaren Automatisierungsgerätes aus, insbesondere im Hinblick auf die Performance des Automatisierungsgerätes.

Mittels geeigneter Maßnahmen wird - wie im Folgenden gezeigt - die Latenz verringert. Es wird dazu zur näheren Verdeutlichung zunächst auf Figur 1 verwiesen, in welcher ein von einer ersten CPU-Baugruppe zu einer zweiten CPU-Baugruppe übermittelter Zeichenstrom 21 dargestellt ist. Die CPU-Baugruppen sind Bestandteil eines hochverfügbaren, redundant ausgebildeten Automatisierungsgerätes. Dieser Zeichenstrom 21 umfasst das Datenpaket 9 (Figur 5), ein weiteres Datenpaket 22, dessen zugeordnete Priorität höher ist als die Priorität des Datenpaketes 9, ein erstes und ein zweites Synchronisierzeichen 23, 24 sowie ein Unterbrechungs- und ein Fortsetzungskennzeichen 25, 26.

Der Aufbau des Datenpaketes 22 entspricht dem des Datenpaketes 9, weist also ebenfalls eine Vielzahl von Zeichen 10 auf, welche z. B. 8, 16 oder 32 Bit breit organisiert sind und sowohl Steuerinformationen bzw. Steuerzeichen als auch Nutzdaten enthalten, wobei ebenfalls Steuerzeichen vorgesehen sind, von denen ein Steuerzeichen den Beginn des Datenpaketes 22 und ein Steuerzeichen das Ende des Datenpaketes 22 anzeigt. Aufgrund des identischen Aufbaus wird daher auf diesen nicht näher eingegangen.

Einen derartigen Zeichenstrom 21 erzeugt z. B. eine erste CPU-Baugruppe für den Fall, dass während der Übertragung des Datenpaketes 9 die Übertragung des hochprioren Datenpakets 22 eines durch diese erste CPU-Baugruppe zu verarbeitenden hochprioren Dienstes angefordert wird.

Im vorliegenden Ausführungsbeispiel wird angenommen, dass aufgrund einer derartigen Anforderung diese CPU-Baugruppe nach der Übertragung eines Zeichens 27 des Datenpaketes 9 die Übertragung der weiteren Zeichen 10 dieses Datenpaketes 9 stoppt bzw. unterbricht und statt dessen zunächst das Unterbrechungskennzeichen 25, dann das erste Synchronisierzeichen 23, darauf folgend das vollständige Datenpaket 22, anschlie-βend das zweite Synchronisierzeichen 23 und schließlich das Fortsetzungskennzeichen 26 überträgt. Auf dieses Fortsetzungskennzeichen 26 folgend übermittelt die CPU-Baugruppe die noch ausstehenden zu übertragenden Zeichen 10 des ersten Datenpaketes 9. Aufgrund des Unterbrechungskennzeichens 25 erkennt eine Daten empfangende zweite CPU-Baugruppe, dass die Übertragung des ersten Datenpaketes 9 im empfangenen Zeichenstrom 21 unterbrochen ist, und aufgrund des Fortsetzungskennzeichens 26 in diesem Zeichenstrom 21, dass die auf dieses Fortsetzungskennzeichen 26 folgenden Zeichen 10 zu dem zuvor unterbrochenen Datenpaket 9 gehören.

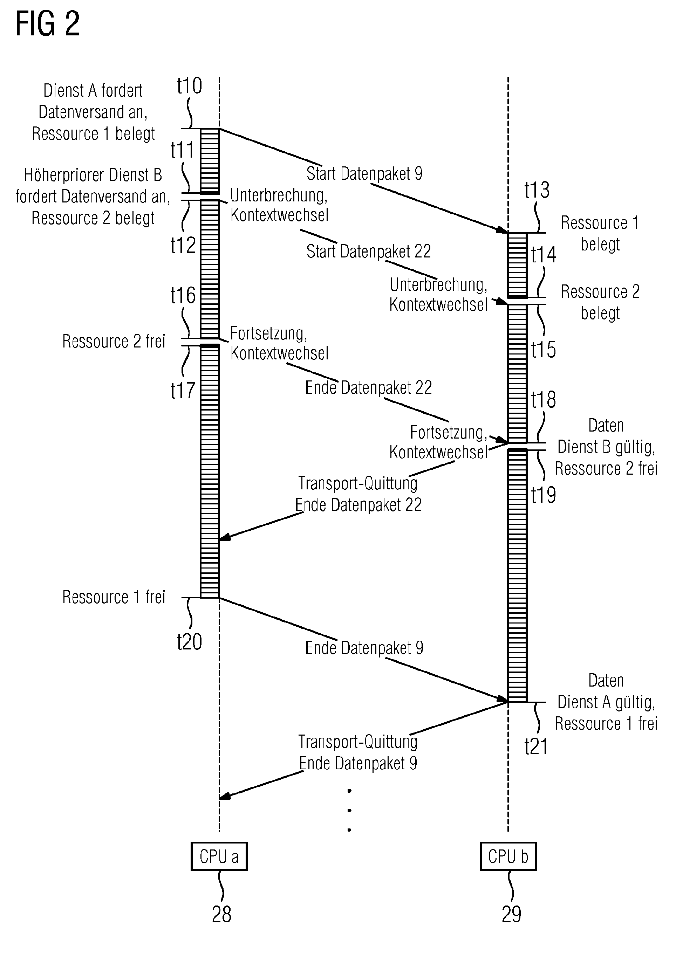

Figur 2 zeigt den Ablauf der Übertragung des Zeichenstroms 21, der von einer ersten CPU-Baugruppe 28 zu einer zweiten CPU-Baugruppe 29 übertragen wird, die Bestandteile eines weiteren redundant ausgebildeten, hochverfügbaren Automatisierungsgerätes sind. Nach einer Aufforderung zur Übertragung des ersten niederprioren Datenpaketes 9 eines Dienstes A startet zu einem Zeitpunkt t10 die erste CPU-Baugruppe 28 die Datenübertragung, die zu einem Zeitpunkt t11 durch eine Anforderung zur Übertragung des Datenpaketes 22 eines Dienstes B unterbrochen wird. Die erste CPU-Baugruppe 28 fügt in den Zeichenstrom 21 die Unterbrechungs- und Fortsetzungszeichen 25, 26 sowie das erste und zweite Synchronisierzeichen 23, 24 (Figur 1) ein und setzt zu einem Zeitpunkt t12 die Übertragung fort, wobei die erste CPU-Baugruppe 28 ab diesem Zeitpunkt t12 bis zu einem Zeitpunkt t16 zunächst das Unterbrechungszeichen 25, dann das Synchronisierzeichen 23, anschlie-βend das zweite Datenpaket 22 und schließlich das zweite Synchronisierzeichen 24 sowie das Fortsetzungszeichen 26 der zweiten CPU-Baugruppe 29 überträgt.

Aufgrund des Unterbrechungszeichens 25 erkennt die zweite CPU-Baugruppe 29 zu einem Zeitpunkt t14, dass die Übertragung des ab einem Zeitpunkt t13 empfangenen Datenpaketes 9 unterbrochen ist und dass aufgrund eines empfangenen Kennzeichens 28 zu einem Zeitpunkt t15 der Empfang des zweiten Datenpaketes 22 beginnt.

Das Ende des Empfangs des zweiten Datenpaketes 22 erkennt die zweite CPU-Baugruppe 29 anhand eines Kennzeichens 30 zu einem Zeitpunkt t18, wobei die zweite CPU-Baugruppe 29 den Empfang des zweiten Datenpaketes 22 der ersten CPU-Baugruppe 28 quittiert. Ferner erkennt die zweite CPU-Baugruppe 29 aufgrund des empfangenen Fortsetzungskennzeichens 26 zu einem Zeitpunkt t19, dass die Daten, die im Folgenden bis zu einem Zeitpunkt t21 empfangen werden, die restlichen Zeichen 10 des ersten Datenpaketes 9 sind, welche die erste CPU-Baugruppe 28 ab einem Zeitpunkt t17 bis zu einem Zeitpunkt t20 der zweiten CPU-Baugruppe 29 übermittelt. Den vollständigen Empfang des ersten Datenpaketes 9 quittiert die zweite CPU-Baugruppe 29 ebenfalls und übermittelt dazu der ersten CPU-Baugruppe 28 eine entsprechende Transport-Quittung.

Durch die Unterbrechung der bereits begonnenen Übertragung des ersten Datenpakets 9 und der nach dieser Unterbrechung anschließenden Übertragung des zweiten hochprioren Datenpaketes 22 wird die Latenz (Latenzzeit) wesentlich verringert. Einerseits wird die Zeitspanne ab der Aufforderung zur Datenübertragung des zweiten Datenpaketes 22 bis zum Beginn dieser Datenübertragung zum Zeitpunkt t12 und andererseits die Zeitspanne ab dieser Aufforderung bis zum vollständigen Empfang des zweiten Datenpaketes 22 zum Zeitpunkt t18 verringert.

In Figur 3 sind in stark vereinfachter Form Datenübertragungskomponenten eines Kommunikationsteilnehmers, beispielsweise eines Kommunikationsteilnehmers in Form einer CPU-Baugruppe eines hochverfügbaren Automatisierungsgerätes, dargestellt. Diese Datenübertragungskomponenten sind für eine Übertragung eines nieder- und eines hochprioren Datenpaketes ausgebildet und weisen sowohl eine Sender- als auch eine Empfängereinheit 31, 32 auf, welche über einen Übertragungskanal 33 mit hier nicht dargestellten Sender- und Empfängereinheiten eines weiteren Kommunikationsteilnehmers verbunden sind. Die Sendereinheit 31 als auch die Empfängereinheit 32 sind mit ersten und zweiten Ressourcen 34, 35, 36, 37 versehen, welche zusammen mit einer Sender- und einer Empfangs-Logik 38, 39 sowie mit Koordinierungsmitteln 40, 41 die Datenübertragung steuern. Die Sendereinheit 31 weist zwei "logische Kanäle" 42, 43 auf, von denen einer der Kanäle 42, 43 zusammen mit einer der Ressourcen 34, 35 zum "Halten der Übertragung" des unterbrochenen niederprioren Datenpaketes und der andere der Kanäle 42, 43 zusammen mit der anderen der Ressourcen 34, 35 zum Übertragen des eingeschachtelten hochprioren Datenpaketes vorgesehen sind.

Entsprechend ist die Empfängereinheit 32 mit jeweils zwei "logischen Kanälen" 44, 45 versehen, von denen ebenfalls einer dieser Kanäle 44, 45 zusammen mit einer der Ressourcen 36, 37 zur Hinterlegung des bereits übertragenen Teils des unterbrochenen niederprioren Datenpaketes und der andere der Kanäle 44, 45 zusammen mit der anderen Ressource 36, 37 zum Empfangen und Verarbeiten des eingeschachtelten hochprioren Datenpaketes vorgesehen sind.

## Patentansprüche

1. Verfahren zur Übertragung von Datenpaketen von einer Sendereinheit zu einer Empfängereinheit über eine Kommunikationsverbindung, wobei die Datenpakete (9, 22) jeweils mindestens ein Kennzeichen (15, 28) für den Beginn und mindestens ein Kennzeichen (17, 30) für das Ende des jeweiligen Datenpaketes (9, 22) aufweisen und jedem Datenpaket (9, 22) eine Priorität zugeordnet ist, **dadurch gekennzeichnet, dass**
- mittels der Sendereinheit die Übertragung eines ersten Datenpaketes (9) unterbrochen wird, falls durch einen Dienst eine Datenübertragung eines zweiten Datenpakets (22) angefordert wird, dessen Priorität höher ist als die Priorität des ersten Datenpaketes,
- nach der Unterbrechung mittels der Sendereinheit mindestens ein Unterbrechungszeichen (25) und das zweite Datenpaket (22) übertragen und nach dieser Übertragung mindestens ein Fortsetzungszeichen (26) übertragen und die Übertragung des ersten Datenpaketes (9) fortgesetzt werden,
- aufgrund des mindestens einen Unterbrechungszeichens (25) die Unterbrechung des Empfangs des ersten Datenpaketes (9) sowie der Empfang des zweiten Datenpaketes (22) und aufgrund des mindestens einen Fortsetzungszeichens (26) die Fortsetzung des Empfangs des ersten Datenpakets (9) durch die Empfängereinheit erkannt werden.

2. Verfahren nach Anspruch 1, **dadurch gekennzeichnet, dass** durch die Sendereinheit
- das mindestens eine Unterbrechungszeichen (25) in Form von mindestens einem Unterbrechungskennzeichen (25) und/oder in Form des Kennzeichens (28) für den Beginn des zweiten Datenpaketes (22) oder in Form einer Kombination aus einem Unterbrechungskennzeichen (25) und einem gesonderten Zeichen für den Beginn des zweiten Datenpaketes (22) und
- das mindestens eine Fortsetzungszeichen (26) in Form mindestens eines Fortsetzungskennzeichens (26) und/oder in Form des Kennzeichens (30) für das Ende des zweiten Datenpaketes oder in Form einer Kombination aus einem Fortsetzungskennzeichen (26) und einem gesonderten Zeichen für das Ende des zweiten Datenpaketes
übertragen werden.

3. Verfahren nach Anspruch 1 oder 2, **dadurch gekennzeichnet, dass** mittels der Sendereinheit die Anforderung der Datenübertragung des zweiten Datenpaketes (22) bis zum Ende der Übertragung des ersten Datenpaketes (9) oder bis zur Übertragung einer vorgebbaren Anzahl von Zeichen des ersten Datenpaketes (9) blockiert wird.

4. Verfahren nach einem der Ansprüche 1 bis 3, **dadurch gekennzeichnet, dass** das erste Datenpaket (9) einer ersten Prioritätsklasse und das zweite Datenpaket (22) einer zweiten Prioritätsklasse zugeordnet wird, deren Priorität höher ist als die Priorität der ersten Prioritätsklasse, wobei innerhalb dieser Prioritätsklassen die Datenpakete (9, 22) mit unterschiedlichen Prioritäten versehen werden.

5. Verfahren nach Anspruch 4, **dadurch gekennzeichnet, dass** die Prioritäten dynamisch angepasst werden.

6. Verfahren nach einem der Ansprüche 1 bis 5, **dadurch gekennzeichnet, dass** die Dauer der Unterbrechung für ein weiteres hochpriores Datenpaket und/oder die Anzahl weiterer Unterbrechungen begrenzt wird.

7. Anordnung zur Übertragung von Datenpaketen von einer Sendereinheit zu einer Empfängereinheit über eine Kommunikationsverbindung, wobei die Datenpakete (9, 22) jeweils mindestens ein Kennzeichen (15, 28) für den Beginn und mindestens ein Kennzeichen (17, 30) für das Ende des jeweiligen Datenpaketes (9, 22) aufweisen und jedem Datenpaket (9, 22) eine Priorität zugeordnet ist, **dadurch gekennzeichnet, dass**
- die Sendereinheit dazu ausgebildet ist, die Übertragung eines ersten Datenpaketes (9) zu unterbrechen, falls ein Dienst eine Datenübertragung eines zweiten Datenpakets (22) anfordert, dessen Priorität höher ist als die Priorität des ersten Datenpaketes (9),
- die Sendereinheit ferner dazu ausgebildet ist, nach der Unterbrechung mindestens ein Unterbrechungszeichen (25) und das zweite Datenpaket (22) zu übertragen und nach dieser Übertragung mindestens ein Fortsetzungszeichen (26) zu übertragen und die Übertragung des ersten Datenpaketes (9) fortzusetzen,
- die Empfängereinheit dazu ausgebildet ist, aufgrund des mindestens einen Unterbrechungszeichens (25) die Unterbrechung des Empfangs des ersten Datenpaketes (9) sowie den Empfang des zweiten Datenpaketes (22) und aufgrund des mindestens einen Fortsetzungszeichens (26) die Fortsetzung des Empfangs des ersten Datenpakets (9) zu erkennen.

8. Anordnung nach Anspruch 7, **dadurch gekennzeichnet, dass** die Sendereinheit ferner dazu ausgebildet ist,
- das mindestens eine Unterbrechungszeichen (25) in Form von mindestens einem Unterbrechungskennzeichen (25) und/oder in Form des Kennzeichens (28) für den Beginn des zweiten Datenpaketes (22) oder in Form einer Kombination aus einem Unterbrechungskennzeichen (25) und einem gesonderten Zeichen für den Beginn des zweiten Datenpaketes (22)
- und das mindestens eine Fortsetzungszeichen (26) in Form mindestens eines Fortsetzungskennzeichens (26) und/oder in Form des Kennzeichens (30) für das Ende des zweiten Datenpaketes (22) oder in Form einer Kombination aus einem Fortsetzungskennzeichen (26) und einem gesonderten Zeichen für das Ende des zweiten Datenpaketes
zu übertragen.

9. Anordnung nach Anspruch 7 oder 8, **dadurch gekennzeichnet, dass** die Sendereinheit ferner dazu ausgebildet ist, die Anforderung der Datenübertragung des zweiten Datenpaketes (22) bis zum Ende der Übertragung des ersten Datenpaketes (9) oder bis zur Übertragung einer vorgebbaren Anzahl von Zeichen des ersten Datenpaketes (9) zu blockieren.

10. Anordnung nach einem der Ansprüche 7 bis 9, **dadurch gekennzeichnet, dass** das erste Datenpaket (9) einer ersten Prioritätsklasse und das zweite Datenpaket (22) einer zweiten Prioritätsklasse zugeordnet ist, deren Priorität höher ist als die Priorität der ersten Prioritätsklasse, wobei innerhalb dieser Prioritätsklassen die Datenpakete (9, 22) mit unterschiedlichen Prioritäten versehen sind.

11. Anordnung nach Anspruch 10, **dadurch gekennzeichnet, dass** die Prioritäten dynamisch angepasst sind.

12. Anordnung nach einem der Ansprüche 7 bis 11, **dadurch gekennzeichnet, dass** die Dauer der Unterbrechung für ein weiteres hochpriores Datenpaket und/oder die Anzahl weiterer Unterbrechungen begrenzt ist.

13. Sendereinheit für eine Anordnung nach einem der Ansprüche 7 bis 12, wobei die Anordnung zur Übertragung von Datenpaketen (9, 22) von der Sendereinheit über eine Kommunikationsverbindung zu einer Empfängereinheit vorgesehen ist, wobei ferner die Datenpakete (9, 22) jeweils mindestens ein Kennzeichen (15, 28) für den Beginn und mindestens ein Kennzeichen (17, 30) für das Ende des jeweiligen Datenpaketes (9, 22) aufweisen und jedem Datenpaket (9, 22) eine Priorität zugeordnet ist, **dadurch gekennzeichnet, dass**
- die Sendereinheit dazu ausgebildet ist, die Übertragung eines ersten Datenpaketes (9) zu unterbrechen, falls ein Dienst eine Datenübertragung eines zweiten Datenpakets (22) anfordert, dessen Priorität höher ist als die Priorität des ersten Datenpaketes (9),
- die Sendereinheit ferner dazu ausgebildet ist, nach der Unterbrechung mindestens ein Unterbrechungszeichen (25) und das zweite Datenpaket (22) zu übertragen und nach dieser Übertragung mindestens ein Fortsetzungszeichen (26) zu übertragen und die Übertragung des ersten Datenpaketes (9) fortzusetzen.

14. Sendereinheit nach Anspruch 13, **dadurch gekennzeichnet, dass** die Sendereinheit ferner dazu ausgebildet ist,
- das mindestens eine Unterbrechungszeichen (25) in Form von mindestens einem Unterbrechungskennzeichen (25) und/oder in Form des Kennzeichens (28) für den Beginn des zweiten Datenpaketes (22) oder in Form einer Kombination aus einem Unterbrechungskennzeichen (25) und einem gesonderten Zeichen für den Beginn des zweiten Datenpaketes (22) und
- das mindestens eine Fortsetzungszeichen (26) in Form mindestens eines Fortsetzungskennzeichens (26) und/oder in Form des Kennzeichens (30) für das Ende des zweiten Datenpaketes (22) oder in Form einer Kombination aus einem Fortsetzungskennzeichen (26) und einem gesonderten Zeichen für das Ende des zweiten Datenpaketes (22) zu übertragen.

15. Sendereinheit nach Anspruch 13 oder 14, **dadurch gekennzeichnet, dass** die Sendereinheit ferner dazu ausgebildet ist, die Anforderung der Datenübertragung des zweiten Datenpaketes (22) bis zum Ende der Übertragung des ersten Datenpaketes (9) oder bis zur Übertragung einer vorgebbaren Anzahl von Zeichen des ersten Datenpaketes (9) zu blockieren.

16. Sendereinheit nach einem der Ansprüche 13 bis 15, **dadurch gekennzeichnet, dass** die Sendereinheit dazu ausgebildet ist, die Dauer der Unterbrechung für ein weiteres hochpriores Datenpaket und/oder die Anzahl weiterer Unterbrechungen zu begrenzen.

17. Empfängereinheit für eine Anordnung nach einem der Ansprüche 7 bis 11, wobei
- die Anordnung zur Übertragung von Datenpaketen (9, 22) von der Sendereinheit über eine Kommunikationsverbindung zu der Empfängereinheit vorgesehen ist,
- die Datenpakete (9, 22) jeweils mindestens ein Kennzeichen (15, 28) für den Beginn und mindestens ein Kennzeichen (17, 30) für das Ende des jeweiligen Datenpaketes (9, 22) aufweisen und jedem Datenpaket (9, 22) eine Priorität zugeordnet ist,
- die Sendereinheit dazu ausgebildet ist, die Übertragung eines ersten Datenpaketes (9) zu unterbrechen, falls ein Dienst eine Datenübertragung eines zweiten Datenpakets (22) anfordert, dessen Priorität höher ist als die Priorität des ersten Datenpaketes (9),
- die Sendereinheit ferner dazu ausgebildet ist, nach der Unterbrechung mindestens ein Unterbrechungszeichen (25) und das zweite Datenpaket (22) zu übertragen und nach dieser Übertragung mindestens ein Fortsetzungszeichen (26) zu übertragen und die Übertragung des ersten Datenpaketes (9) fortzusetzen,
**dadurch gekennzeichnet, dass** die Empfängereinheit dazu ausgebildet ist, aufgrund des mindestens einen Unterbrechungszeichens (25) die Unterbrechung des Empfangs des ersten Datenpaketes (9) sowie den Empfang des zweiten Datenpaketes (22) und aufgrund des mindestens einen Fortsetzungszeichens (26) die Fortsetzung des Empfangs des ersten Datenpakets (9) zu erkennen.
